# EUROPEAN PATENT APPLICATION

(11) **EP 4 600 766 A1**
(43) Date of publication of application: **13.08.2025**
(21) Application number: 25152027.6
(22) Date of filing: 15.01.2025
(51) Int. Cl.: G05B 13/02, G05B 17/02, G06N 3/08, G06N 20/00

(54) **INFORMATION PROCESSING APPARATUS, GENERATION METHOD, AND GENERATION PROGRAM**

(30) Priority: 09.02.2024 JP 2024018807
(71) Applicant: Yokogawa Electric Corporation, Tokyo 180-8750 (JP)
(72) Inventor: LIU, Zhuo, Musashino-shi, Tokyo, 180-8750, (JP); KANOKOGI, Hiroaki, Musashino-shi, Tokyo, 180-8750, (JP)
(74) Representative: Winter, Brandl - Partnerschaft mbB

(57) **Abstract**

An information processing apparatus 10 includes an acquisition unit configured to acquire time-series data related to a process value that represents an operation amount with respect to a process and a state of the process, a generation unit configured to generate an input-output data set in which an operation amount and a process value at a first time are adopted as an input sample and a process value at a second time subsequent to the first time is adopted as an output sample, an adding unit configured to add virtual error data to each process value of the input sample, and a training unit configured to train a machine learning model that outputs a process value at the second time while adopting the operation amount and the process value at the first time as input, by using the input-output data set to which the virtual error data is added.

## Description

### BACKGROUND OF THE INVENTION

### 1. Field of the Invention

The present invention relates to an information processing apparatus, a generation method, and a non-transitory computer readable recording medium.

### 2. Description of the Related Art

In the field of plant process control or the like, an Artificial Intelligence (AI) control method for obtaining a most optimal control strategy by reinforcement learning has been proposed.

In the reinforcement learning, it is needed to search for a strategy by repeating trial and error on a control target, and therefore, in some aspects, it is unrealistic to perform the reinforcement learning in a production environment, such as a petrochemical plant, in which safety is most important.

From the aspect as described above, it is often the case that an AI control strategy, for which effectiveness is verified by a simulation as a result of execution of the reinforcement learning on a simulator that simulates a process in the production environment, is diverted in a real environment.

As one example of the simulator that performs the reinforcement learning, a simulator that uses a physical model that is constructed based on a physical property of a control target is known.

The physical property of the control target is strictly defined in the simulator that uses the physical model, and therefore, accuracy of the simulator is expected to improve. In contrast, advanced technical knowledge is needed to define the physical property of the control target, which is highly dependent on individual skills, so that an immense amount of time and effort is needed to construct a physical model.

As another example, in some cases, a statistical model that represents a dynamic input-output relationship of a process is constructed from operation data of a process in the production environment and the constructed statistical model is used for a simulation.

When the process is a single-input single-output linear system, a system identification method, such as Auto-Regressive with eXogenou (ARX) model, for estimating a coefficient of each of variables in a formula that defines a relationship between input and output is used. However, in some aspects, when a process is a multi-input multi-output non-linear system, it may be difficult to construct a model based on a formula.

As another example, in some cases, a dynamic prediction model that predicts a next state by adopting operation data with respect to a process and a state before the process as input is trained by a machine learning technology, such as deep learning, and used for a simulation.

It is known that the model that is generated by deep learning as described above is highly useful for a highly-nonlinear process. Further, even without domain knowledge with respect to a control target process, it is possible to easily generate a model by deep learning by preparing operation data (input-output data) of the process as training data. Therefore, it is possible to realize a data-drive simulator that is adoptive to a linear process, a nonlinear process, a process of a single-input single-output system, and a process of a multi-input multi-output system.

However, prediction accuracy of the dynamic prediction model as described above is dependent on an amount and quality of the training data, and therefore, in some aspects, a domain for which prediction is accurate and a domain for which prediction is inaccurate may be present.

From the aspect as described above, a method of preparing a plurality of models and performing ensemble prediction to reduce an influence of an inaccurate prediction result on a control strategy of the reinforcement learning has been proposed.
Patent Document 1: Japanese Laid-open Patent Publication No. 2022-25859
Patent Document 2: Japanese Laid-open Patent Publication No. 2023-48962

However, it is unrealistic to completely prevent occurrence of a prediction error in the dynamic prediction model as described above. For example, even when the ensemble prediction as described above is performed, if the number of models or the number of times of training in the reinforcement learning is not adequate, prediction accuracy and generalization performance are reduced.

In the current situation, the data-driven simulator as described above repeats a recursion process of using output of the dynamic prediction model as described above as input at a next time, so that a prediction error propagates successively every time the dynamic prediction model as described above performs prediction. As a result, in the data-driven simulator as described above, in some aspects, it is difficult to prevent an increase in the prediction error with passage of time.

An object of the present invention is to realize generation of a data-driven simulator that is able to prevent propagation of error.

### SUMMARY OF THE INVENTION

According to one aspect of embodiments, an information processing apparatus includes: an acquisition unit configured to acquire time-series data related to a process value that represents an operation amount with respect to a process and a state of the process; a generation unit configured to generate an input-output data set in which an operation amount and a process value at a first time are adopted as an input sample and a process value at a second time subsequent to the first time is adopted as an output sample; an adding unit configured to add virtual error data to each process value of the input sample; and a training unit configured to train a machine learning model that outputs a process value at the second time while adopting the operation amount and the process value at the first time as input, by using the input-output data set to which the virtual error data is added.

According to one aspect of embodiments, a generation method carried out by a computer includes: acquiring time-series data related to a process value that represents an operation amount with respect to a process and a state of the process; generating an input-output data set in which an operation amount and a process value at a first time are adopted as an input sample and a process value at a second time subsequent to the first time is adopted as an output sample; adding virtual error data to each process value of the input sample; and training a machine learning model that outputs a process value at the second time while adopting the operation amount and the process value at the first time as input, by using the input-output data set to which the virtual error data is added.

According to one aspect of embodiments, a generation program causes a computer to execute a process including: acquiring time-series data related to a process value that represents an operation amount with respect to a process and a state of the process; generating an input-output data set in which an operation amount and a process value at a first time are adopted as an input sample and a process value at a second time subsequent to the first time is adopted as an output sample; adding virtual error data to each process value of the input sample; and training a machine learning model that outputs a process value at the second time while adopting the operation amount and the process value at the first time as input, by using the input-output data set to which the virtual error data is added.

### ADVANTAGEOUS EFFECTS OF INVENTION

According to one embodiment, it is possible to generate a data-driven simulator that is able to prevent propagation of error.

### BRIEF DESCRIPTION OF THE DRAWINGS

FIG. 1 is a block diagram illustrating a functional configuration example of an information processing apparatus;
FIG. 2 is a schematic diagram illustrating one aspect of a problem;
FIG. 3 is a diagram illustrating a case of propagation of error;
FIG. 4 is a block diagram illustrating an internal configuration example of a simulator generation unit;
FIG. 5 is a schematic diagram illustrating an example of generation of an input-output data set;
FIG. 6 is a diagram illustrating an example of association between input and output;
FIG. 7 is a diagram illustrating an example of the input-output data set after an error is added;
FIG. 8 is a schematic diagram illustrating an example of training of a dynamic prediction model;
FIG. 9 is a schematic diagram illustrating an example of a simulation;
FIG. 10 is a diagram illustrating an example of prevention of propagation of error;
FIG. 11 is a flowchart illustrating the flow of an overall process performed by the simulator generation unit;
FIG. 12 is a flowchart illustrating the flow of an error adding process;
FIG. 13 is a diagram illustrating an example of a simulation result;
FIG. 14 is a diagram illustrating an example of the simulation result;
FIG. 15 is a block diagram illustrating a functional configuration example of an information processing apparatus according to an application example; and
FIG. 16 is a diagram illustrating a hardware configuration example.

### DETAILED DESCRIPTION OF THE PREFERRED EMBODIMENTS

Modes (hereinafter, described as "embodiments") for carrying out an information processing apparatus, a generation method, and a generation program according to the present disclosure will be described below with reference to the accompanying drawings. The embodiments illustrate only examples and aspects, and structures, operation, functions, properties, characteristics, methods, usages, and the like are not limited by the examples.

### First Embodiment

### Example of use case

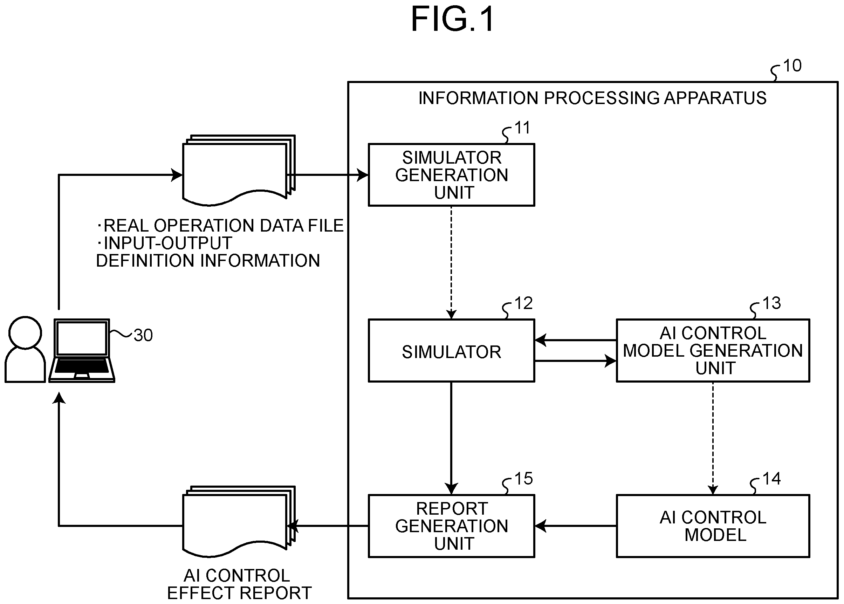

FIG. 1 is a block diagram illustrating a functional configuration example of an information processing apparatus. FIG. 1 illustrates, as one example, an information processing apparatus 10 that provides a generation function to generate a dynamic prediction model that is used for a data-driven simulator, in particular, a dynamic prediction model that is able to prevent propagation of error when a simulation is performed.

The "data-driven simulator" described here may indicate a simulator that is adaptive to a linear process, a nonlinear process, a process of a single-input single-output system, and a process of a multi-input multi-output system among simulators that simulate state transition of a process that is one example of a dynamic system.

Furthermore, the "dynamic prediction model" indicates a machine learning model that predicts a next state by adopting operation with respect to a process and a previous state of the process as input. For example, in the dynamic prediction model, a dynamic input-output relationship of a process may be trained by a machine learning technology, such as deep learning, by using operation data of the process in a production environment. Examples of the state of the process as described above include a value of a process variable that is what is called a process value.

As one embodiment, the information processing apparatus 10 may be implemented by a server that provides the above-described generation function on-premises. As another embodiment, the information processing apparatus 10 may be implemented by an application of a Software as a Service (SaaS) type and may be able to provide a service corresponding to the above-described generation function as a cloud service.

The information processing apparatus 10 as described above may be connected to a client terminal 30 via an arbitrary network NW. For example, the network NW may be implemented by an arbitrary technology, such as an intranet, the Internet, or Low Power Wide Area network for Internet of Things (IoT), regardless of whether the network NW is wired or wireless. Meanwhile, the network NW need not always be a single network, but may be implemented by connecting an intranet and the Internet by a network device, such as a gateway.

The client terminal 30 is a terminal device that receives provision of the above-described generation function. The client terminal 30 may be used by all concerned parties, such as a process engineer, an operator, and a worker. For example, the client terminal 30 may be implemented by an arbitrary computer, such as a personal computer, a smartphone, a tablet terminal, or a wearable terminal.

Meanwhile, FIG. 1 illustrates an example in which the above-described generation function is provided by a client server system, but this is a mere example, and the above-described generation function may be provided stand-alone.

### One aspect of problem

As described above in the section of the background of the invention, it is unrealistic to completely prevent occurrence of a prediction error in the dynamic prediction model as described above. For example, even when the ensemble prediction as described above is performed, if the number of models or the number of times of training in the reinforcement learning is not adequate, prediction accuracy and generalization performance are reduced.

In the current situation, the data-driven simulator as described above repeats a recursion process of using output of the dynamic prediction model at a previous time as input at a next time, so that a prediction error propagates successively every time the dynamic prediction model as described above performs prediction. As a result, it is difficult to prevent an increase in the prediction error with passage of time.

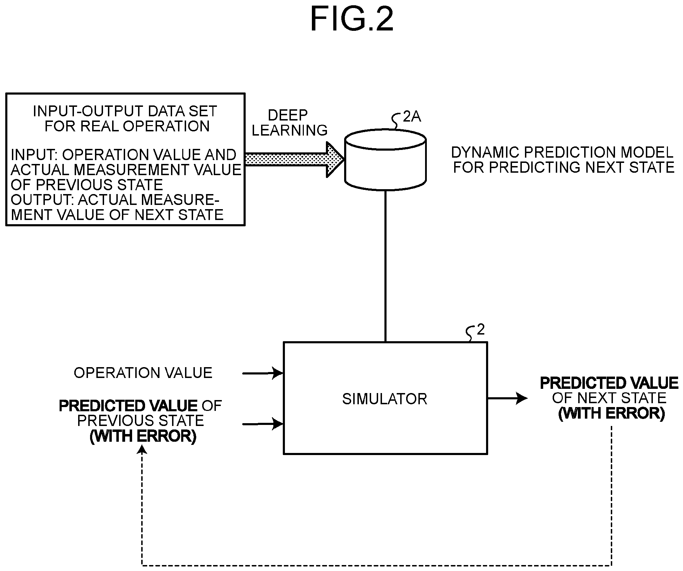

FIG. 2 is a schematic diagram illustrating one aspect of a problem. FIG. 2 illustrates, as a conventional example, a dynamic prediction model 2A, which adopts an operation amount with respect to a process and a previous state of the process as input and adopts a next state of the process as output, and a simulator 2 that uses the dynamic prediction model 2A.

The dynamic prediction model 2A is trained by a machine learning technology, such as deep learning, by using operation data of a process in a production environment as training data. For example, a parameter of the dynamic prediction model 2A is trained in accordance with an algorithm of the deep learning by adopting the operation amount with respect to the process and the previous state of the process as explanatory variables and adopting the next state of the process as an object variable. Accordingly, the trained dynamic prediction model 2A is generated.

When the dynamic prediction model 2A as described above is applied to the production environment, that is, in the inference phase, a problem with propagation of error does not occur as long as a state of the process is observed in real time and a state at a next time is predicted always based on actual measurement values at prior times.

However, when the simulator 2 performs a simulation by using the dynamic prediction model 2A, the simulator 2 is separated from a real environment, and therefore, in some cases, it may be difficult to obtain, as observation data, an actual measurement value of a state of a process as input to the dynamic prediction model 2A.

Therefore, in order for the simulator 2 to successively repeat prediction of the state of the process, a predicted value of the state of the process, which is output as a next state by the dynamic prediction model 2A at a prior time, is recursively used as input to the dynamic prediction model 2A at a subsequent time.

In this case, error that occurs in the predicted value of the state of the process at the prior time is also recursively used as the input to the dynamic prediction model 2A at a subsequent time. By repetition of the recursion as described above, error successively propagates and prediction error accordingly increases with passage of time.

In particular, when a control target process provides a plurality of kinds of output and predicted values of the plurality of kinds of output are recursively used as next input or when input and output of a process are largely delayed and it is needed to use predicted values of states at a plurality of prior times as input, the problem with the propagation of error becomes more serious.

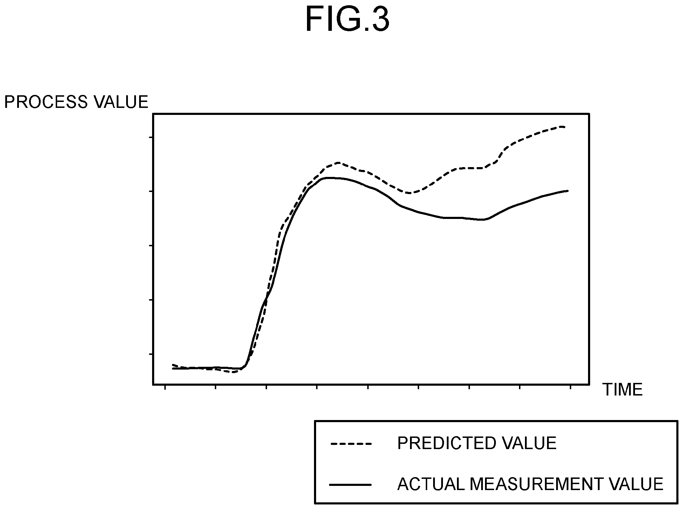

FIG. 3 is a diagram illustrating a case of propagation of error. For example, in FIG. 3, predicted values of a state of a process that are chronologically output by the simulator 2 according to the conventional example by a simulation are plotted with a dashed line, and actual measurement values of the state of the process are plotted, as reference, with a solid line. Meanwhile, a vertical axis of a graph illustrated in FIG. 3 represents the state of the process, such as a value of a process variable, and a horizontal axis of the graph illustrated in FIG. 3 represents a time.

As illustrated in FIG. 3, it is clear that the predicted value and the actual measurement value are not largely different from each other at the beginning of the simulation, but error between the predicted value and the actual measurement value increases with passage of time.

If reinforcement learning is performed on the simulator 2 in which the propagation of error occurs, and a simulation on state transition is performed while continuously changing an operation amount, prediction error keeps increasing along with the state transition, which adversely affects the reinforcement learning when a control strategy is updated by using, as a feedback, predicted values that may cause a large error.

### Configuration of information processing apparatus

A functional configuration of the information processing apparatus 10 that has the generation function to resolve the problem as described above will be described below. FIG. 1 schematically illustrates blocks related to functions that are included in the information processing apparatus 10.

As illustrated in FIG. 1, the information processing apparatus 10 includes a simulator generation unit 11, a simulator 12, an AI control model generation unit 13, an AI control model 14, and a report generation unit 15.

The simulator generation unit 11 is a processing unit that generates the above-described data-driven simulator as the simulator 12. For generation of the simulator 12 as described above, operation data in a real environment and input-output definition information on the simulator 12 may be used to generate the simulator 12. In the following, the operation data in the real environment may be described as "real operation data". Input of the real operation data and the input-output definition information as described above may be received from, as one example, the client terminal 30.

The AI control model generation unit 13 is a processing unit that generates the AI control model 14. As one aspect, the AI control model generation unit 13 performs reinforcement learning on the simulator 12 that is generated by the simulator generation unit 11. For example, the AI control model generation unit 13 inputs an operation amount to the simulator 12 in accordance with a control strategy that is determined by a reinforcement learning algorithm, such as an input pattern of the operation amount. Further, the AI control model generation unit 13 updates the input pattern of the operation amount based on the predicted value of the state of the process that is output by the simulator 12. For example, update of the input pattern of the operation amount is repeated until an objective function for calculating an evaluation value related to an objective, such as an effect, efficiency, or cost, is optimized. The AI control model 14 that has, as the control strategy, the input pattern of the operation amount that is obtained by the optimization as described above is generated.

The report generation unit 15 is a processing unit that performs a simulation on process control based on the control strategy of the AI control model 14 on the simulator 12, and outputs a result of the AI control as a report. Examples of an output destination of the report as described above include the client terminal 30. For example, it is possible to check an effect of the AI control by comparing a result of the AI control with a result of a control strategy with which process control has been performed in the past.

In this manner, the simulator 12 according to the present embodiment may be used in an aspect of performing the reinforcement learning for obtaining the AI control model on the simulation, and in the aspect of performing a simulation of process control by the AI control model.

Meanwhile, FIG. 1 illustrates the example in which the information processing apparatus 10 includes the three functional units, that is, the simulator generation unit 11, the AI control model generation unit 13, and the report generation unit 15, but the three functional units need not always be provided as a package. For example, the AI control model generation unit 13 and the report generation unit 15 may be implemented by an external apparatus, a service, or an application.

### Internal configuration of simulator generation unit

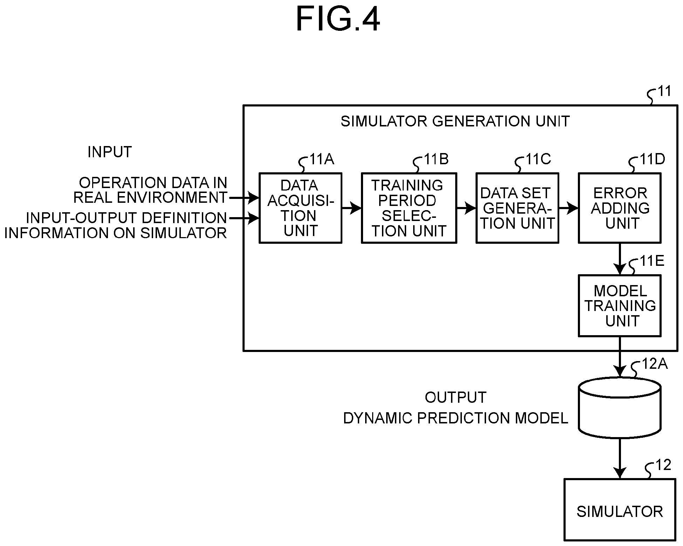

An internal configuration of the simulator generation unit 11 will be described below. FIG. 4 is a block diagram illustrating the internal configuration of the simulator generation unit 11. As illustrated in FIG. 4, the simulator generation unit 11 performs input and output as follows.

### Input 1: real operation data

The real operation data may be past time-series operation data (a sensor value that represents the state of a process, such as temperature and pressure, or an operation amount, such as valve opening, with respect to the process) that is collected in a real environment. For example, in the field, such as a plant, a measurement device, such as a sensor for measuring the state of the process, such as temperature or pressure, an operation device, such as an actuator, for performing operation on the process, such as operation of opening and closing a valve, and the like are installed as field devices (not illustrated). Time-series data of the state of the process that is chronologically collected from the measurement device or time-series data of the operation amount with respect to the process that is chronologically collected from the operation device may be adopted. Meanwhile, the state of the process and the operation amount with respect to the process need not always be collected directly from the measurement device or the operation device, but may be acquired from a recorder or a controller to which the measurement device or the operation device is connected.

### Input 2: Input-output definition information on simulator 12

The input-output definition information may include an "input tag", an "output tag", and a "delay time between input and output". For example, the "input tag" indicates a name or an identifier of data of an element (for example, a control valve) for changing the state of the process. Further, the "output tag" indicates a name or an identifier of data of an element (for example, temperature, pressure, or the like) that represents the state of the process. Furthermore, the "delay time between input and output" indicates a time from when input data is changed to when a change of output data appears.

### Output 1: dynamic prediction model (trained)

The dynamic prediction model is a machine learning model that has a function to dynamically predict a next state from a previous state and the operation with respect to a control target process.

As illustrated in FIG. 4, the simulator generation unit 11 includes a data acquisition unit 11A, a training period selection unit 11B, a data set generation unit 11C, an error adding unit 11D, and a model training unit 11E.

The data acquisition unit 11A is a processing unit that acquires data that is used for training of the dynamic prediction model as described above. As one aspect, the data acquisition unit 11A is able to acquire, from the client terminal 30, real operation data and the input-output definition information on the simulator 12. At this time, the real operation data need not always be acquired as a single data file, but may be acquired as a plurality of data files. Based on the above, the data acquisition unit 11A extracts input data that corresponds to the input tag and output data that corresponds to the output tag, which are defined by the input-output definition information in the real operation data. In the following, when the input data and the output data need not be distinguished from each other, the input data and the output data may be collectively described as "input-output data".

The training period selection unit 11B is a processing unit that selects a training period to be subjected to machine learning for training the dynamic prediction model as described above, from an entire segment of the input-output data that is acquired by the data acquisition unit 11A.

As one example, the training period selection unit 11B is able to receive designation of the training period by user definition via the client terminal 30. In addition, the training period selection unit 11B may receive designation of the training period by system definition that is set by a developer who has developed the generation function as described above, an administrator of the information processing apparatus 10, or the like. The training period may be designated by selection of a start point and an end point or selection of one of a start point and an end point and a length of a segment.

As another example, the training period selection unit 11B is able to automatically select the training period by a machine learning technology. For example, the training period selection unit 11B divides the input-output data of the entire segment into a plurality of segments. Further, the training period selection unit 11B clusters pieces of segment data based on a feature value, such as an average, dispersion, or a frequency characteristic, of each piece of the segment data of the plurality of the divided segments. The clustering as described above may be performed in accordance with an algorithm, such as a K-means method, for example. Furthermore, the training period selection unit 11B extracts segment data that belongs to each of clusters at a predetermined ratio, such as equal proportions.

With this configuration, it is possible to prevent training data from being biased to a distribution of a feature value that corresponds to a specific operation state of the plant. In other words, in actual operation of a process in a real plant, a period in which the process is stable is much longer than a period in which the process is unstable. Therefore, in some cases, the entire segment of the input-output data need to be a population that includes a steady state and an unsteady state with an unbalanced ratio, such as 9 to 1. In this case, if the training data is randomly extracted from the population, in some aspects, training data with a feature of the steady state may be extracted biasedly. From the aspect as described above, by extracting the segment data that belongs to each of the clusters with equal proportions, it is possible to prevent the training data with the feature of the steady state from being extracted biasedly.

The data set generation unit 11C is a processing unit that generates an input-output data set from input-output data corresponding to the training period that is selected by the training period selection unit 11B. As one aspect, the data set generation unit 11C associates an input sample and an output sample that are included in the input-output-data corresponding to the training period, based on the delay time between input and output that is defined in the input-output definition information.

Specifically, from the aspect of constructing a dynamic prediction model that dynamically predicts a next state from a previous state and operation while taking into account the delay time between input and output of a process in the plant, the data set generation unit 11C generates, based on time-series data of actual operation, an input-output data set in which actual measurement values of operation at a plurality of times corresponding to the delay time and actual measurement values of previous states at a plurality of times are adopted as input samples and an actual measurement value of a state at a next time is adopted as an output sample, and uses the input-output data set as training data for the dynamic prediction model.

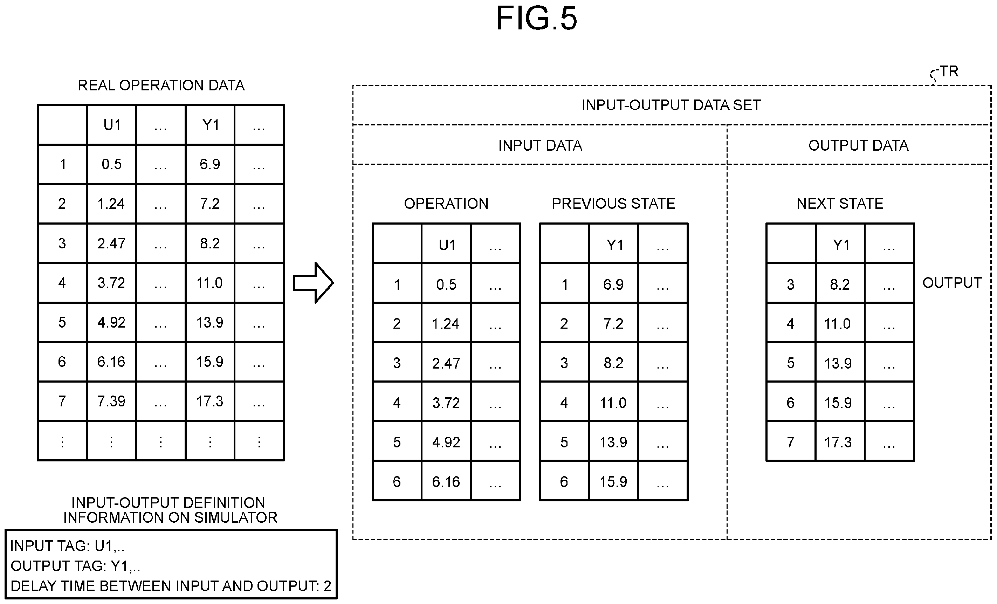

FIG. 5 is a schematic diagram illustrating an example of generation of the input-output data set. FIG. 5 illustrates an example in which, as the input-output definition information on the simulator 12, "U1" is defined as the input tag, "Y1" is defined as the output tag, and "2" is defined as the delay time between input and output.

As illustrated in FIG. 5, input-output data that corresponds to the input tag of "U1" and the output tag of "Y1" in the real operation data is extracted by the data acquisition unit 11A. Furthermore, input-output data corresponding to the training period that is selected by the training period selection unit 11B is extracted from an entire period of the input-output data that corresponds to the input tag of "U1" and the output tag of "Y1".

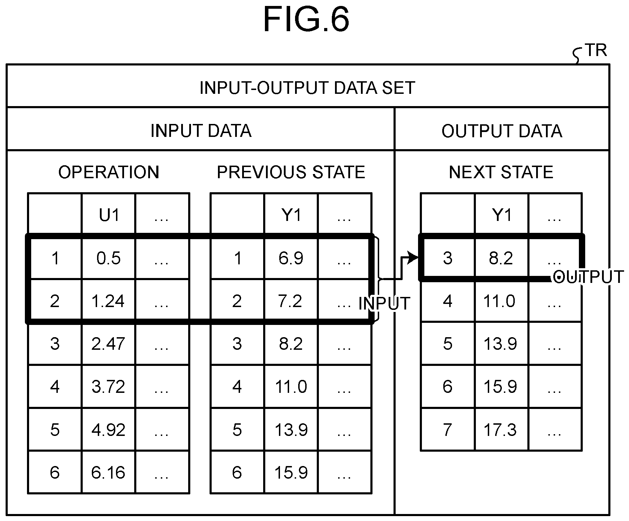

After extraction of the input-output data corresponding to the training period as described above, the data set generation unit 11C generates an input-output data set by data manipulation as described below. Specifically, the data set generation unit 11C chronologically extracts entries that match the input tag of "U1" of the input-output definition information from the first time to a time just before the last time from among pieces of the input-output data corresponding to the training period. Accordingly, a column of "operation" that forms an input-output data set TR is extracted. Further, the data set generation unit 11C chronologically extracts entries that match the output tag of "Y1" of the input-output definition information from the first time to the time just before the last time from among the pieces of the input-output data corresponding to the training period. Accordingly, a column of a "previous state" that forms the input-output data set TR is extracted. Furthermore, the data set generation unit 11C extracts entries that match the output tag of "Y1" from a time that is shifted by the delay time between input and output to the last time from among the pieces of the input-output data corresponding to the training period. Accordingly, a column of a "next state" that forms the input-output data set TR is extracted. As a result, the input-output data set TR as illustrated in FIG. 6 is generated. Thereafter, the data set generation unit 11C associates the input and the output that are included in the input-output data set TR based on the delay time between input and output that is defined in the input-output definition information.

FIG. 6 is a diagram illustrating an example of association between input and output. FIG. 6 selectively illustrates an example, as one aspect, in which input corresponding to output at a time "3" is associated, but it is of course possible to associate input corresponding to output at a different time in the same manner. Meanwhile, even in FIG. 6, similarly to FIG. 5, it is assumed that the delay time between input and output that is defined in the input-output definition information is "2".

As illustrated in FIG. 6, a record at the time "3" in the output data is associated with records at the last two times corresponding to the delay time between input and output in the input data. Specifically, an actual measurement value of "0.5" of the operation at a time " 1", an actual measurement value of "6.9" of the previous state at the time " 1", an actual measurement value of "1.24" of the operation at a time "2", and an actual measurement value of "7.2" of the previous state at the time "2" are adopted as an input sample, an actual measurement value of "8.2" of the next state at the time "3" is adopted as an output sample (correct answer label), and the input sample and the output sample are associated with each other. In the following, a pair of the input sample and the output sample that are associated with each other may be described as an input-output sample.

Meanwhile, FIG. 6 illustrates the example in which the records of the input data at the time "1" and the time "2" that correspond to the time difference of "2" from when the input is changed to when the output is changed are associated with the record at the time "3" in the output data, but it is not always needed to associate a plurality of records in the input data with a record in the output data. For example, it may be possible to associate only one of the records at the time "1" and the time "2" in the input data with the record at the time "3" in the output data.

Furthermore, while the example in which the input-output data set TR has a table format is illustrated, this is only one example, and the data structure is not limited to a relational database. For example, it may be possible to adopt data that is written in a tag format by a markup language, such as Extensible Markup Language (XML), or data that is written with a comma or a line break, such as Comma-Separated Values (CSV).

The error adding unit 11D is a processing unit that adds an error to the state of the process of the input sample, for each of the input-output samples that are included in the input-output data set. As one aspect, the error adding unit 11D adds, as virtual error data, a predetermined probability distribution, such as a random number that is generated in accordance with a normal distribution with an average of zero and a standard deviation of a predetermined value, to the actual measurement value of the "previous state" in the input sample. In the following, to distinguish a label of the input-output data set that is generated by the data set generation unit 11C and a label of the input-output data set in which the error data is added to each of the input samples by the error adding unit 11D, the latter may be described as an "error-added input-output data set". At this time, the error adding unit 11D is able to generate a plurality of kinds of error-added input-output data sets from a single input-output data set. In this case, the error adding unit 11D is able to change a parameter, such as a probability distribution or a random number seed, for generating the random number that is used to generate the virtual error data, for each of the error-added input-output data sets.

More specifically, the error adding unit 11D reads the input-output data set that is generated by the data set generation unit 11C. Further, the error adding unit 11D repeats a process as described below a certain number of times that corresponds to a number M of the error-added input-output data sets to be generated from a single input-output data set. Specifically, the error adding unit 11D sets a parameter for generating a random number that is used to generates m-th error data. Thereafter, the error adding unit 11D repeats the process of generating the virtual error data by generating the random number in accordance with the predetermined probability distribution until the error data is added to all of the input samples that are included in the input-output data set, and adding the error data to the previous state of the process in the input samples. Accordingly, an m-th error-added input-output data set is generated. Thereafter, the above-described process, that is, the process of setting the parameter for generating the random number and adding the error data to the "previous state" to each of the input samples, is repeated until M-th error-added input-output data set is generated.

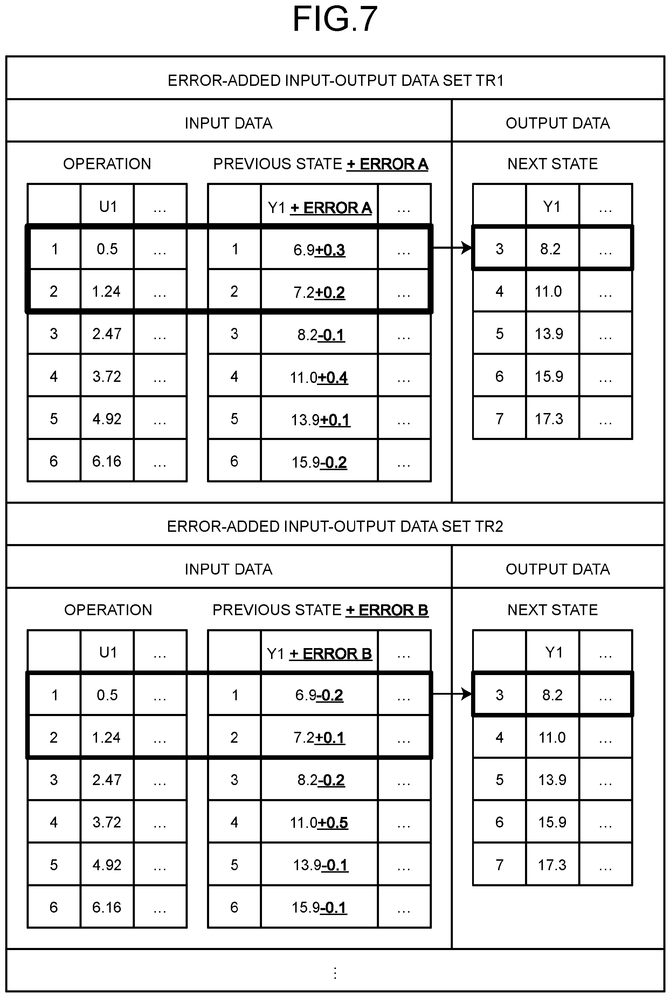

FIG. 7 is a diagram illustrating an example of the error-added input-output data set. For example, FIG. 7 selectively illustrates a first error-added input-output data set TR1 and a second error-added input-output data set TR2 among the M error-added input-output data sets. As illustrated in FIG. 7, it is possible to generate, from the single input-output data set TR illustrated in FIG. 6, M error-added input-output data sets that include the error-added input-output data set TR1 to which an error A that has generated a random number based on a parameter a for generating the random number is added, and the error-added input-output data set TR2 to which an error B that has generated a random number based on a parameter b for generating the random number is added.

According to the error-added input-output data sets as described above, it is possible to regard values of the "previous state" as predicted values that include errors in accordance with the probability distribution centered at the actual measurement values, rather than the actual measurement values. Therefore, the error-added input-output data set may be adopted as an input-output data set in which the actual measurement value of the operation with respect to the process and the error-added predicted value of the previous state are adopted as input and the actual measurement value of the next state is adopted as output. Therefore, by causing the model training unit 11E to perform machine learning, it is possible to accurately predict the next state even if a prediction error has occurred with respect to previous state data.

The model training unit 11E is a processing unit that trains the dynamic prediction model. In the following, to distinguish an untrained dynamic prediction model and a trained dynamic prediction model, the former may be identified as a "dynamic prediction model 12a", and the latter may be identified as a "dynamic prediction model 12A".

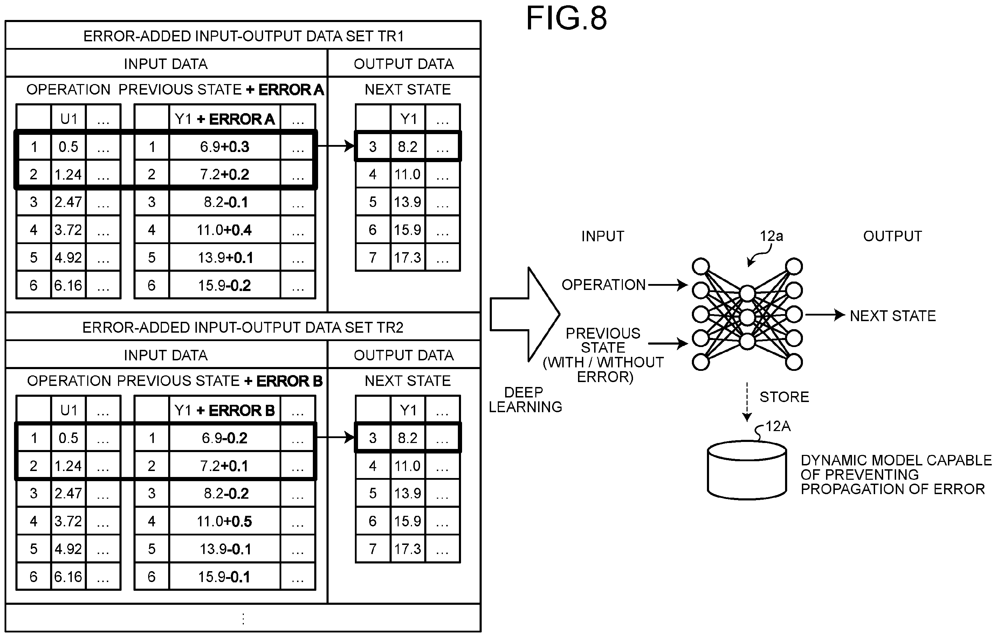

FIG. 8 is a schematic diagram illustrating an example of training of the dynamic prediction model. As illustrated in FIG. 8, the model training unit 11E is able to perform machine learning, such as deep learning, on the dynamic prediction model 12a by using M error-added input-output data sets TR1 to TRM that are generated by the error adding unit 11D as the training data sets. The dynamic prediction model 12a as described above may be implemented by an arbitrary machine learning, such as a neural network, a Deep Neural Network (DNN), a support vector machine, or a Gradient Boosting. For example, the model training unit 11E trains a parameter of the dynamic prediction model 12a in accordance with an algorithm of the deep learning by adopting the operation amount with respect to the process and the previous state of the process as explanatory variables of the dynamic prediction model 12a and adopting the next state of the process as an object variable of the dynamic prediction model 12a. Accordingly, the trained dynamic prediction model 12A is generated.

Meanwhile, while the example in which the M error-added input-output data sets TR1 to TRM are used for the machine learning of the dynamic prediction model 12a, it may be possible to additionally use the input-output data set that is generated by the data set generation unit 11C. Furthermore, while the example is described in which the plurality of data sets are used for the machine learning, it is of course possible to perform machine learning if at least one or more data sets are present.

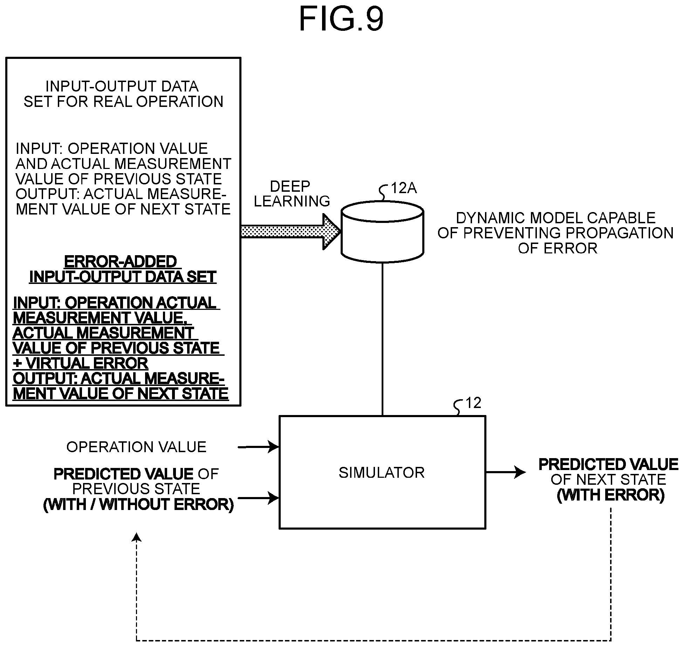

The dynamic prediction model 12A that is generated as described above is used as the simulator 12 in an environment in which the reinforcement learning as described above is performed. FIG. 9 is a schematic diagram illustrating an example of a simulation. FIG. 9 illustrates the dynamic prediction model 12A that are generated by the simulator generation unit 11 according to the present embodiment and the simulator 12 that uses the dynamic prediction model 12A.

As illustrated in FIG. 9, the simulator 12 is able to simulate state transition due to a change in the operation amount by sending a query to the dynamic prediction model 12A by using initial values of operation and state data that are determined in advance, and by recursively using the predicted value of the next state that is output from the dynamic prediction model 12A. Furthermore, the dynamic prediction model 12A is trained to accurately predict the next state regardless of whether an error of the previous state is present. As a result, it is possible to prevent propagation of error.

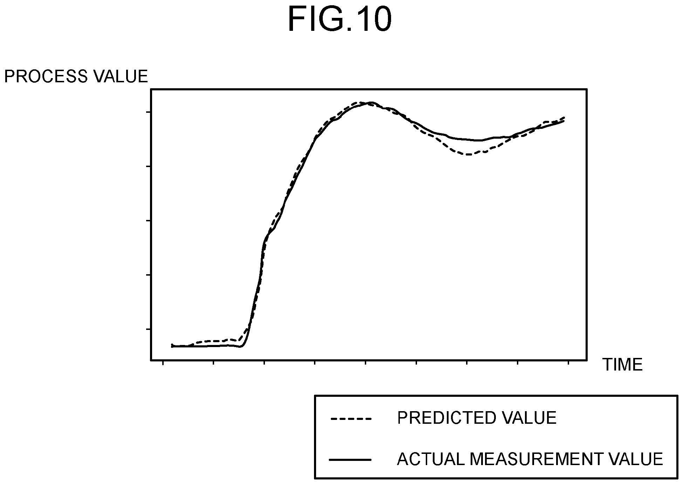

FIG. 10 is a diagram illustrating an example of prevention of propagation of error. For example, in FIG. 10, predicted values of the state of the process, which are chronologically output by a simulation by the simulator 12 according to the present embodiment are plotted with a dashed line, and actual measurement values of the state of the process are plotted, as a reference, with a solid line. Meanwhile, a vertical axis of a graph illustrated in FIG. 10 represents the state of the process, such as a value of a process variable, and a horizontal axis of the graph illustrated in FIG. 10 represents a time.

As illustrated in FIG. 10, it is clear that a large difference does not occur between the predicted value and the actual measurement value not only at the start of the simulation, but also until the end of the simulation, and propagation of error between the predicted value and the actual measurement value is prevented over the entire period of the simulation.

### Flows of processes

Flows of processes performed by the information processing apparatus 10 according to the present embodiment will be described below. Here, (1) an overall process that is performed by the simulator generation unit 11 will be first described, and thereafter, (2) an error adding process that is performed as a subroutine will be described.

### (1) Overall process

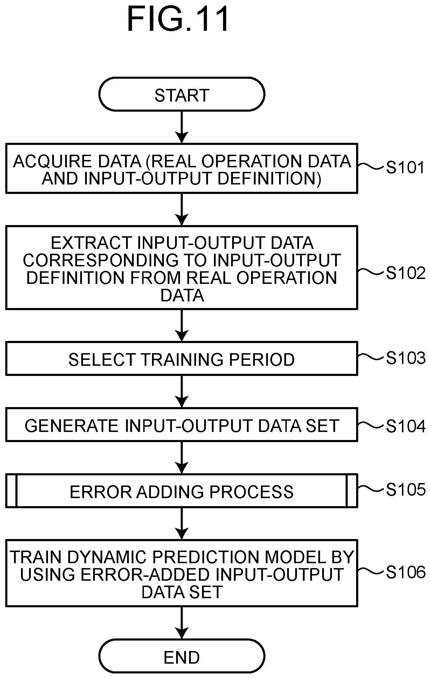

FIG. 11 is a flowchart illustrating the flow of an overall process performed by the simulator generation unit 11. As illustrated in FIG. 11, the data acquisition unit 11A acquires the real operation data and the input-output definition information on the simulator 12 from the client terminal 30 (Step S101).

Subsequently, the data acquisition unit 11A extracts input data that corresponds to an input tag and output data that corresponds to an output tag, where the input tag and the output tag are defined by the input-output definition information, from the real operation data that is acquired at Step S101 (Step S102).

Then, the training period selection unit 11B selects a training period in which machine learning for training the dynamic prediction model 12a is to be performed (Step S103).

Thereafter, the data set generation unit 11C generates an input-output data set from the input-output data that corresponds to the training period that is selected at Step S103 from the entire period of the input-output data that is extracted at Step S102 (Step S104).

Furthermore, the error adding unit 11D performs an "error adding process" of adding, as virtual error data, a random number that is generated in accordance with a predetermined probability distribution to the actual measurement value of the "previous state" of an input sample, for each of input-output samples that are included in the input-output data set that is generated at Step S104 (Step S105).

As a result of the error adding process that is performed at Step S105 as described above, the M error-added input-output data sets TR1 to TRM are generated.

Thereafter, the model training unit 11E performs machine learning, such as deep learning, on the dynamic prediction model 12a by using the M error-added input-output data sets TR1 to TRM that are generated as a result of the process at Step S105 as a training data set (Step S106).

As a result of the machine learning that is performed at Step S106 as described above, the trained dynamic prediction model 12A is generated.

### (2) Error adding process

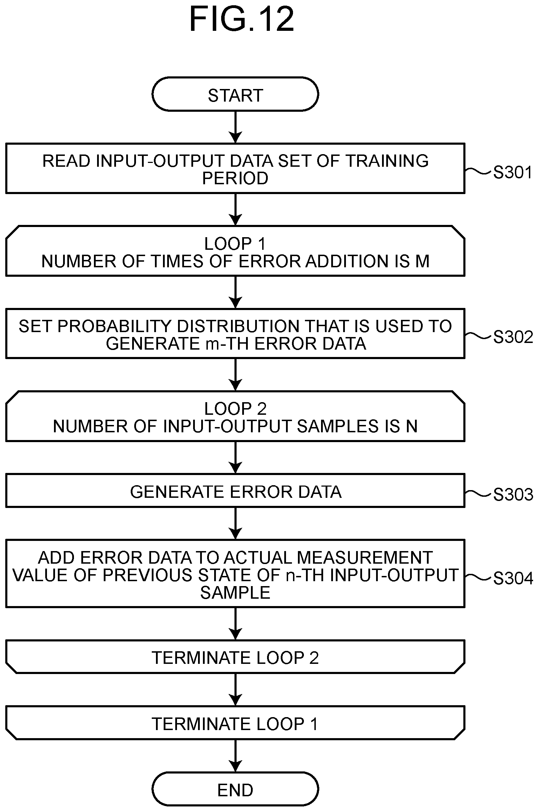

FIG. 12 is a flowchart illustrating the flow of the error adding process. The process corresponds to the process that is performed at Step S105 illustrated in FIG. 11. As illustrated in FIG. 12, the error adding unit 11D reads the input-output data set that is generated at Step S104 (Step S301).

Further, the error adding unit 11D performs a loop process 1 of repeating processes from Step S302 to Step S304 as described below a certain number of times that corresponds to the number M of the error-added input-output data sets that are to be generated from the single input-output data set. Meanwhile, the processes from Step S302 to Step S304 described below need not always be repeated, but may be performed in a parallel manner.

Specifically, the error adding unit 11D sets a parameter, such as a probability distribution or a random number seed, for generating a random number that is used to generate m-th error data (Step S302).

Thereafter, the error adding unit 11D performs a loop process 2 of repeating processes from Step S303 to Step S304 as described below a certain number of times that corresponds to a number N of input-output samples that are included in the input-output data set. Meanwhile, the processes at Step S303 and Step S304 described below need not always be repeated, but may be performed in a parallel manner.

Specifically, the error adding unit 11D generates virtual error data by generating a random number by using the parameter for generating the random number that is set at Step S302 (Step S303). Subsequently, the error adding unit 11D adds the error data that is generated at Step S303 to the previous state of the input sample in the n-th input-output sample (Step S304).

By repeating the loop process 2 as described above, the error data is added to the previous states of the N input samples that are included in the input-output data set, so that the m-th error-added input-output data set is completed. Furthermore, by repeating the loop process 1, the M error-added input-output data sets are completed.

### Effects of first embodiment

As described above, the information processing apparatus 10 according to the present embodiment performs machine learning on the dynamic prediction model 12a by using the input-output data set in which the virtual error data is added to the input sample among pieces of time-series data of input and output with respect to process control.

The dynamic prediction model 12A that is generated by the machine learning as described above is trained to accurately predict a next state regardless of whether an error of the previous state is present, so that when performing, as the simulator 12, a simulation on state transition, it is possible to reduce an inverse effect of the error of the predicted value of the previous state on the prediction of the next state.

Therefore, according to the information processing apparatus 10 of the present embodiment, it is possible to generate a data-driven simulator that is able to prevent propagation of error.

Here, to explain an improved effect of the dynamic prediction model 12A according to the present embodiment, simulation results are compared between the simulator 2 that uses the dynamic prediction model 2A according to the conventional example and the simulator 12 that uses the dynamic prediction model 12A according to the present embodiment.

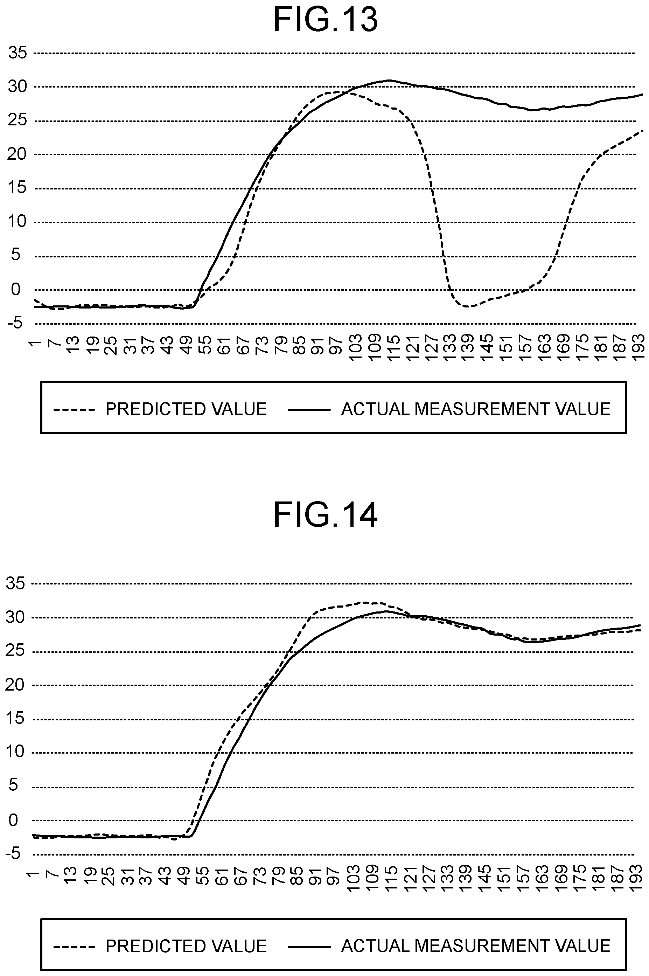

FIG. 13 and FIG. 14 are diagrams illustrating examples of simulation results. For example, in FIG. 13, predicted values of the state of the process, which are chronologically output by a simulation by the simulator 2 that uses the dynamic prediction model 2A according to the conventional example, are plotted with a dashed line. In contrast, in FIG. 14, predicted values of the state of the process, which are chronologically output by a simulation by the simulator 12 that uses the dynamic prediction model 12A according to the present embodiment, are plotted with a dashed line. Further, in FIG. 13 and FIG. 14, actual measurement values of the state of the process are plotted, as references, with solid lines. Meanwhile, vertical axes of graphs illustrated in FIG. 13 and FIG. 14 represent the state of the process, such as values of process variables, and horizontal axes of the graphs illustrated in FIG. 13 and FIG. 14 represent times.

For example, when a simulation is performed by using the dynamic prediction model 2A according to the conventional example, the error of the predicted value at the previous time largely affects a predicted value at a next time. Therefore, as illustrated in FIG. 13, it is clear that a prediction error increasingly propagates along with the state transition. According to the simulator 2 of the conventional example as described above, a concordance rate between the reference actual measurement value and the predicted value of the simulation only reaches 3%.

In contrast, when a simulation is performed by using the dynamic prediction model 12A according to the present embodiment, it is possible to prevent propagation of error. Therefore, as illustrated in FIG. 14, even when an error temporarily occurs during the simulation, the error does not tend to increase. In this manner, according to the simulator 12 of the present embodiment, a concordance rate between the reference actual measurement value and the predicted value of the simulation reaches 89%, so that it is possible to achieve a higher concordance rate as compared with the conventional example.

Therefore, when an AI control strategy is to be trained by repeating trial and error by the reinforcement learning on the simulator 12 according to the present embodiment, propagation of error is prevented and an inverse effect of a prediction error on the reinforcement learning of the control strategy is reduced, so that it is possible to contribute to examination of an effect of an AI control simulation.

### Other Embodiments

While the embodiments of the present disclosure have been described above, various modifications may be made, and various different modes may be adopted other than the embodiments as described above.

### Simulator for each operating condition

A process in a plant or the like need not always be controlled under the same operating condition. For example, an operating condition in a petrochemical process may be changed. If the operating condition varies as described above, an input-output relationship of the process may vary, so that, in some aspects, it may be difficult to represent processes under a plurality of operating conditions by a single dynamic prediction model. Therefore, to cope with the plurality of operating conditions, it may be possible to generate a data-driven simulator for each of the operating conditions.

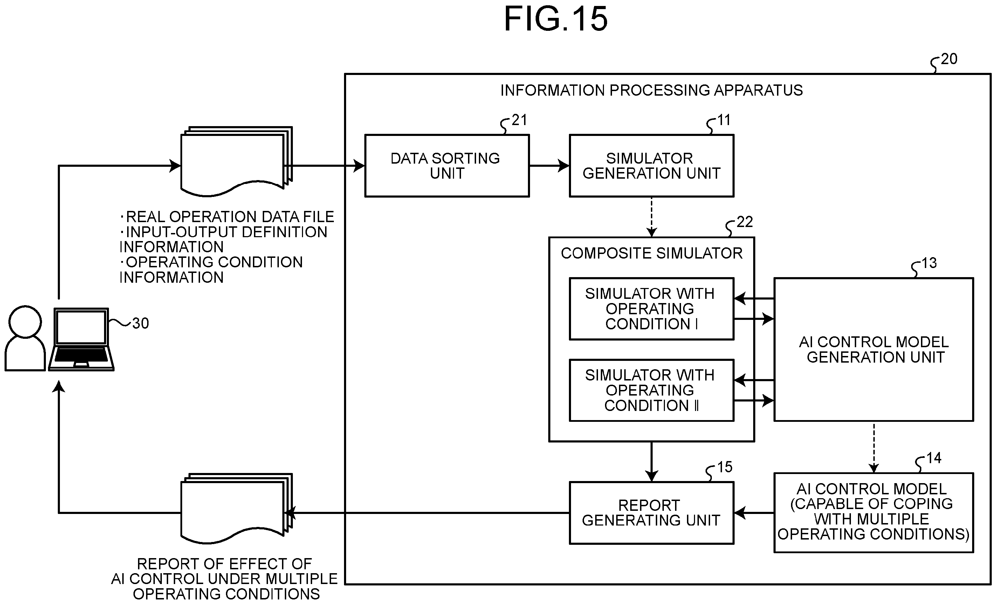

FIG. 15 is a block diagram illustrating a functional configuration example of an information processing apparatus 20 according to the application example. In FIG. 15, blocks that implement the same functions as those of the information processing apparatus 10 illustrated in FIG. 1 are denoted with the same reference symbols.

As illustrated in FIG. 15, the information processing apparatus 20 receives input of operating condition information (a period of each of the operating conditions), in addition to the real operation data and the input-output definition information, from the client terminal 30. For example, in the operating condition information, a period in which process control is performed under a certain operating condition is associated with each of the operating conditions for the process. A data sorting unit 21 is caused to sort segment data of a period corresponding to the operating condition among pieces of the operation data, for each of the operating conditions based on the operating condition information as described above. Thereafter, the simulator generation unit 11 only performs the processes as illustrated in FIG. 11 and FIG. 12 by using the segment data that is allocated to the operating condition, for each of the operating conditions. Accordingly, a simulator that corresponds to the operating condition is generated for each of the operating conditions. Furthermore, the AI control model generation unit 13 may generate an AI control model for each of the operating conditions, with respect to the simulator for each of the operating conditions. Alternatively, the AI control model generation unit 13 may generate a single AI control model that is able to cope with a plurality of operating conditions by being alternately trained with respect to simulators of the plurality of operating conditions. Furthermore, the report generation unit 15 is able to perform, on a simulator for each of the operating conditions, a simulation on AI control based on an AI control model for each of the operating conditions or a single AI control model that is able to cope with a plurality of operating conditions, and verify an effect of the AI control under the plurality of operating conditions.

### Numerical values or the like

Specific examples of matters described in the embodiments as described above, such as the number of the client terminals 30, the number of the error-added input-output data sets, or the parameters that are used for generating the random number, are mere examples, and may be changed. Furthermore, in the flowchart described in the embodiments, order of processes may be changed as long as no contradiction is derived.

### System

The processing procedures, control procedures, specific names, and information including various kinds of data and parameters illustrated in the above-described document and drawings may be arbitrarily changed unless otherwise specified. For example, at least one functional unit among the simulator generation unit 11, the AI control model generation unit 13, and the report generation unit 15 that are included in the information processing apparatus 10 may be configured with a different device.

The components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings. That is, all or part of the apparatuses may be functionally or physically distributed or integrated in arbitrary units depending on various loads or use conditions. Meanwhile, each of the configurations may be a physical configuration.

Moreover, all or an arbitrary part of processing functions that are implemented by the apparatuses may be realized by a CPU and a program analyzed and executed by the CPU, or may be realized by hardware using wired logic.

### Hardware

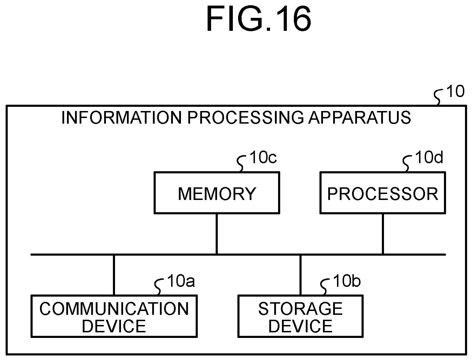

A hardware configuration example of the computer in the embodiments described above will be described below. FIG. 16 is a diagram illustrating a hardware configuration example. As illustrated in FIG. 16, the information processing apparatus 10 includes a communication device 10a, a storage device 10b, a memory 10c, and a processor 10d. Meanwhile, the units illustrated in FIG. 16 are connected to one another via a bus or the like.

The communication device 10a is a network interface card or the like. The storage device 10b is a storage device, such as a Hard Disk Drive (HDD) or a Solid State Drive (SSD). For example, the storage device 10b stores therein a program, a database (DB), or the like for operating the functions as illustrated in FIG. 1 and FIG. 4.

The processor 10d reads a program that executes the same processes as those of each of the processing units illustrated in FIG. 1 from the storage device 10b or the like, loads the program onto the memory 10c, and operates the processes for implementing each of the functions as described above with reference to FIG. 1.

The process as described above implements the same functions as those of the processing units included in the information processing apparatus 10. For example, the processor 10d reads, from the storage device 10b or the like, programs that have the same functions as those of the simulator generation unit 11, the AI control model generation unit 13, the report generation unit 15, and the like. Further, the processor 10d performs processes that implement the same processes as those of the simulator generation unit 11, the AI control model generation unit 13, the report generation unit 15, and the like.

In this manner, by reading and executing the program, the information processing apparatus 10 operates as an information processing apparatus that implements a calculation method. Further, the information processing apparatus 10 may be able to implement the same functions as those of the embodiments as described above by causing a medium reading apparatus to read the above-described program from a recording medium and executing the read program. Meanwhile, he program described in this embodiment need not always be executed by the information processing apparatus 10. For example, the present invention may be applied in the same manner to a case in which a different computer or a server executes the program and a case in which the different computer and the server execute the program in a cooperative manner.

The program as described above may be distributed via a network, such as the Internet. Further, the program as described above may be recorded in an arbitrary recording medium, and may be executed by being read from the recording medium by the computer. For example, the recording medium may be implemented by a hard disk, a flexible disk (FD), a compact disk read only memory (CD-ROM), a Magneto-Optical disk (MO), a Digital Versatile Disc (DVD), or the like.

### Others

Some examples of combinations of disclosed technical features will be described below.

## Claims

1. An information processing apparatus (10) comprising:
an acquisition unit (11A) configured to acquire time-series data related to a process value that represents an operation amount with respect to a process and a state of the process;
a generation unit (11C) configured to generate an input-output data set in which an operation amount and a process value at a first time are adopted as an input sample and a process value at a second time subsequent to the first time is adopted as an output sample;
an adding unit (11D) configured to add virtual error data to each process value of the input sample; and
a training unit (11E) configured to train a machine learning model that outputs a process value at the second time while adopting the operation amount and the process value at the first time as input, by using the input-output data set to which the virtual error data is added.

2. The information processing apparatus (10) according to claim 1, wherein the adding unit (11D) generates the virtual error data by generating a random number in accordance with a predetermined probability distribution.

3. The information processing apparatus (10) according to claim 2, wherein the probability distribution is a normal distribution.

4. The information processing apparatus (10) according to claim 3, wherein the normal distribution has an average of zero and a standard deviation of a predetermined value.

5. The information processing apparatus (10) according to any one of claims 1 to 4, wherein the generation unit (11C) sets the first time and the second time based on a time difference from when the operation amount is changed to when a change in the process value appears.

6. The information processing apparatus (10) according to any one of claims 1 to 5, further comprising an extraction unit (11B) configured to perform clustering on segment data based on a feature value of each piece of the segment data that is obtained by dividing the time-series data into a plurality of segments, and extract the segment data that belongs to each of clusters at a predetermined ratio, wherein
the generation unit (11C) generates the input-output data set by using the segment data that is extracted by the extraction unit (11B).

7. The information processing apparatus (10) according to any one of claims 1 to 6, further comprising a sorting unit (11) configured to sort segment data of a period corresponding to an operating condition in the time-series data for each of operating conditions, based on operating condition information in which a period in which the process is controlled under an operating condition is associated with each of operating conditions of the process, wherein
the generation unit (11C), the adding unit (11D), and the training (11E) unit perform processes by using the segment data that is sorted for each of the operating conditions.

8. The information processing apparatus (10) according to any one of claims 1 to 7, wherein the machine learning model is implemented by a neural network.

9. A generation method carried out by a computer (10), comprising:
acquiring (S101) time-series data related to a process value that represents an operation amount with respect to a process and a state of the process;
generating (S104) an input-output data set in which an operation amount and a process value at a first time are adopted as an input sample and a process value at a second time subsequent to the first time is adopted as an output sample;
adding (S105) virtual error data to each process value of the input sample; and
training (S106) a machine learning model that outputs a process value at the second time while adopting the operation amount and the process value at the first time as input, by using the input-output data set to which the virtual error data is added.

10. A generation program that causes a computer to execute a process comprising:
acquiring (S101) time-series data related to a process value that represents an operation amount with respect to a process and a state of the process;
generating (S104) an input-output data set in which an operation amount and a process value at a first time are adopted as an input sample and a process value at a second time subsequent to the first time is adopted as an output sample;
adding (S 105) virtual error data to each process value of the input sample; and
training (S106) a machine learning model that outputs a process value at the second time while adopting the operation amount and the process value at the first time as input, by using the input-output data set to which the virtual error data is added.
